# EUROPÄISCHE PATENTANMELDUNG

(11) **EP 1 150 144 A1**
(43) Veröffentlichungstag der Anmeldung: **31.10.2001**
(21) Anmeldenummer: 00108421.9
(22) Anmeldetag: 18.04.2000
(51) Int. Cl.: G02B 6/17

(54) **Polarisationsvorrichtung basierend auf verdrehbaren, festverbundenen Lichtwellenleitern**

(71) Anmelder: Acterna Eningen GmbH, 72800 Eningen (DE)
(72) Erfinder: Hoyer,Wolfgang,Dr.-Ing., 72793 Pfullingen (DE); Fuhrmann,Thomas,Dipl.-Ing., 72800 Eningen (DE)
(74) Vertreter: KOHLER SCHMID + PARTNER

(57) **Zusammenfassung**

In der Polarisationsvorrichtung (1) sind ein mit dem Eingang (2) optisch gekoppelter Eingangs-Lichtwellenleiter (4) und ein mit dem Ausgang (3) optisch gekoppelter Ausgangs-Lichtleiter (5) vorgesehen, die beide miteinander über einen stabförmigen Polarisator (6) optisch verbunden sind. Der Polarisator ist im dargestellten Ausführungsbeispiel sowohl mit dem lichtaustrittsseitigen Ende (4a) des Eingangs-Lichtwellenleiters als auch mit dem lichteintrittsseitigen Ende (5a) des Ausgangs-Lichtwellenleiters drehfest verbunden.

Der Polarisator (6) ist in zwei Drehlagern (8) um seine Längsachse drehbar gelagert. Außen am Gehäuse (10) der Polarisationsvorrichtung ist ein drehbar (11) gelagertes Stellrad (12) vorgesehen, dessen Drehung über seine Achse (13) und einen Riemenantrieb (14) auf den Polarisator (6) übertragen wird. Bei einer Drehung des Polarisators wird aufgrund der drehfesten Verbindung auch das eine Ende (4a) des Eingangs-Lichtwellenleiters mitgedreht. Da sein anderes lichteintrittsseitiges Ende (4b) am Eingang (2) ebenfalls drehfest befestigt ist, führt die Drehung des Polarisators zu einer Torsion innerhalb des Eingangs-Lichtwellenleiters. Durch diese Torsion werden sowohl die Schwingungs- als auch die Polarisationsebene des im Eingangs-Lichtwellenleiters geführten Lichts in dessen Umfangsrichtung gedreht.

## Beschreibung

Die Erfindung betrifft eine Polarisationsvorrichtung mit einem verdrehbaren Polarisator und einem vor dem Polarisator angeordneten Lichtwellenleiter sowie ein Verfahren zum Polarisieren des aus einem Lichtwellenleiter austretenden Lichts mittels eines Polarisators.

Bei bekannten Polarisationsvorrichtungen ist das lichtaustrittsseitige Ende des Lichtwellenleiters vor dem Polarisator drehfest gehalten. Je nach Drehstellung des Polarisators wird das Licht unterschiedlich polarisiert oder, wenn der Polarisator als Analysator verwendet wird, nur das Licht mit der entsprechenden Polarisierung durchgelassen.

Bei den bekannten Polarisationsvorrichtungen müssen die Lichtaustrittsseite des Lichtwellenleiters und die Lichteintrittsseite des Polarisators exakt aufeinander ausgerichtet sein, und zwar bei jeder Drehstellung des Polarisators. Dies erfordert einen aufwendigen Aufbau, insbesondere wenn zwischen Lichtwellenleiter und Polarisator noch eine entsprechende Optik angeordnet ist. Außerdem ist die Einfügedämpfung des vom Lichtwellenleiter in den Polarisator eingekoppelten Lichts relativ hoch.

Es ist daher die Aufgabe der Erfindung, eine Polarisationsvorrichtung der eingangs genannten Art derart weiterzubilden, daß ein möglichst einfacher und robuster Aufbau und eine möglichst niedrige Einfügedämpfung erreicht werden können, sowie ein entsprechendes Polarisationsverfahren bereitzustellen.

Diese Aufgabe wird bei der eingangs genannten Polarisationsvorrichtung erfindungsgemäß dadurch gelöst, daß der Lichtwellenleiter mit dem Polarisator drehfest verbunden ist.

Der Lichtwellenleiter kann frei drehbar gelagert sein, so daß sich bei einer Drehung des Polarisators der Lichtwellenleiter auf seiner gesamten Länge torsionsfrei mit dem Polarisator mitdreht. Die Schwingungs- und die Polarisationsebene des in den Lichtwellenleiter eingespeisten Lichts ist dann unabhängig von der jeweiligen Drehstellung des Polarisators, so daß dieser je nach seiner Drehstellung Licht mit unterschiedlicher Polarisation durchläßt. Durch Verdrehen des Polarisators läßt sich so die Polarisation des durchgelassenen Lichts ändern.

Vorzugsweise ist der Lichtwellenleiter jedoch an anderer Stelle drehfest bzw. nahezu drehfest gehalten. Diese drehfeste Halterung kann entweder direkt mittels einer Befestigung des Lichtwellenleiters oder indirekt durch das Eigengewicht des Lichtwellenleiters oder durch die am Lichtwellenleiter wirkende Reibung erfolgen. Eine Drehung des Polarisators führt dann zu einer Torsion des Lichtwellenleiters.

Für die Ankopplung an den Polarisator sind Lichtwellenleiter nötig, die eine möglichst geringe Doppelbrechung besitzen (z.B. Standardfasern). Ist die Faserlänge am Polarisator ausreichend lang, so entsteht eine geringe Torsion in der Faser, die eine geringe Doppelbrechung bewirkt. Die Polarisationsrichtung der Lichtwelle ändert sich nur gering.

Mit anderen Worten bewirkt eine Drehung des Polarisators innerhalb des Lichtwellenleiters eine Torsion, wodurch auf der Torsionslänge die Schwingungsebene und die Polarisation des im Lichtwellenleiters geführten Lichts in dessen Umfangsrichtung gedreht werden. Diese Drehung der Polarisation im Lichtwellenleiter ist allerdings geringer als die entsprechende Drehung des Polarisators, so daß das aus dem Lichtwellenleiter in den Polarisator eintretende Licht, je nach Drehstellung des Polarisators, unterschiedlich polarisiert wird. Der mit der Erfindung erzielte Vorteil besteht in einem einfachen und damit kostengünstigen Aufbau der Polarisationsvorrichtung und in einer niedrigen Einfügedämpfung.

Ein noch einfacherer Aufbau ist möglich, wenn der Polarisator auf seiner dem Lichtwellenleiter gegenüberliegenden Seite drehfest mit einem weiteren Lichtleiter verbunden ist.

Bei einer anderen bevorzugten Ausführungsform ist der Polarisator mit dem Lichtwellenleiter mechanisch oder stofflich verbunden. Der Polarisator und der bzw. die beiden Lichtwellenleiter haben möglichst den gleichen lichtwirksamen Durchmesser.

Vorzugsweise ist für den Polarisator ein Verdrehmechanismus vorgesehen, mittels dem ein Bediener den Polarisator leicht verdrehen kann. Die Verdrehung kann elektrisch, z.B. mittels eines Schrittmotors, oder mechanisch, z.B. über einen Riemen- oder Zahnradantrieb, erfolgen.

Bei besonders bevorzugten Ausführungsformen der Erfindung ist die Polarisationsvorrichtung als separates optisches Bauteil in ein Gehäuse integriert, zwischen dessen optischem Eingang und optischem Ausgang die Polarisationsvorrichtung angeordnet ist. Im Falle eines Verdrehmechanismus kann außen am Gehäuse ein von einem Bediener betätigbares Stell- oder Auslöseelement für den Verdrehmechanismus vorgesehen sein.

Die Erfindung betrifft auch die Anordnung zum Messen der Polarisationsmodendispersion eines optischen Prüflings mit einer Lichtquelle, an die der zu messende optische Prüfling angeschlossen ist, und mit der zwischen dem optischen Prüfling und einem optischen Spektrumanalysator angeordneten Polarisationsvorrichtung, wie sie oben beschrieben ist.

Ein möglicher Prüfling ist z.B. eine Glasfaser, deren Polarisationsmodendispersion zu bestimmen ist.

Sofern die Polarisationsvorrichtung ein separates optisches Bauteil ist, kann der optische Prüfling bequem und leicht an den optischen Eingang und der optische Spektrumanalysator an den optischen Ausgang des Gehäuses der Polarisationsvorrichtung angeschlossen werden. In einer anderen Variante ist der optische Prüfling drehfest mit dem Polarisator verbunden.

Die oben genannte Aufgabe wird bei dem eingangs genannten Polarisationsverfahren erfindungsgemäß dadurch gelöst, daß der mit dem Lichtwellenleiter drehfest verbundene Polarisator gedreht wird.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebene Ausführungsformen sind nicht als abschließende Aufzählung zu verstehen, sondern haben vielmehr beispielhaften Charakter für die Schilderung der Erfindung.

Es zeigt:
- Fig. 1: schematisch die wesentlichen Teile eines ersten Ausführungsbeispiels einer erfindungsgemäßen Polarisationsvorrichtung;
- Fig. 2: ein Detail der Polarisationsvorrichtung gemäß II in Fig. 1;
- Fig. 3: ein Detail eines zweiten Ausführungsbeispiels einer erfindungsgemäßen Polarisationsvorrichtung gemäß III in Fig. 1; und
- Fig. 4: eine erfindungsgemäßes Anordnung zum Messen der Polarisationsmodendispersion eines optischen Prüflings mittels der in Fig. 1 gezeigten Polarisationsvorrichtung.

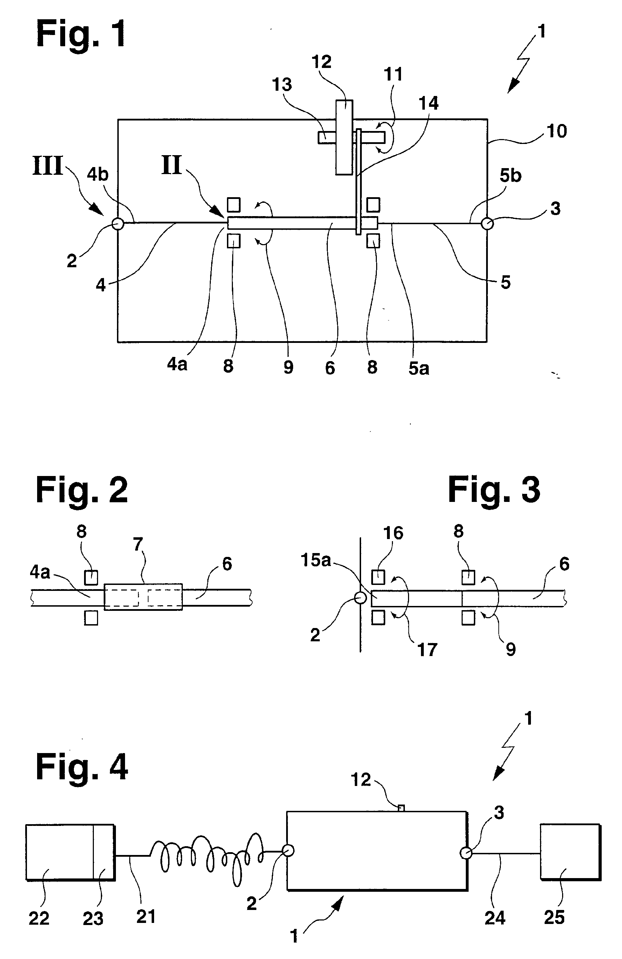

Die in **Fig. 1** allgemein mit **1** bezeichnete Polarisationsvorrichtung ist als ein separates optisches Bauteil mit einem optischen Eingang **2** und einem optischen Ausgang **3** dargestellt. In der Polarisationsvorrichtung 1 sind ein mit dem Eingang 2 optisch gekoppelter Eingangs-Lichtwellenleiter **4** und ein mit dem Ausgang 3 optisch gekoppelter Ausgangs-Lichtleiter **5** vorgesehen, die beide miteinander über einen stabförmigen Polarisator **6** optisch verbunden sind. Der Polarisator 6 ist im dargestellten Ausführungsbeispiel sowohl mit dem lichtaustrittsseitigen Ende **4a** des Eingangs-Lichtwellenleiters 4 als auch mit dem lichteintrittsseitigen Ende **5a** des Ausgangs-Lichtwellenleiters 5 drehfest verbunden.

Als Polarisator 6 kann z.B. der Polarisator Typ PIP-01-PP-15-SM/SM der Fa. ProtoDel International Ltd. mit einer Länge von 50 mm und einem Durchmesser von 2 mm verwendet werden.

Wie **Fig. 2** zeigt, kann die drehfeste Verbindung jeweils durch eine Verbindungshülse **7** gebildet sein, in die der Polarisator 6 und das lichtaustrittsseitige Ende 4a des Eingangs-Lichtwellenleiter 4 eingesteckt und dort jeweils an ihrem Umfang mechanisch fixiert sind. Der Polarisator 6 und die beiden Lichtwellenleiter 4, 5 haben den gleichen lichtwirksamen Durchmesser und den gleichen Außendurchmesser.

Die Lichtwellenleitern 4, 5 können mit dem Polarisator 6 aber auch durch einen Spleiß stofflich verbunden sein. Dazu werden der Lichtwellenleiter 4, 5 und der Polarisator 6 auf einem Spleißgerät zueinander justiert und anschließend mit einem Lichtbogen miteinander verschmolzen.

Der Polarisator 6 ist in zwei Drehlagern **8** um seine Längsachse drehbar gelagert, wie durch den Doppelpfeil **9** angedeutet ist. Außen am Gehäuse **10** der Polarisationsvorrichtung 1 ist ein drehbar (Doppelpfeil **11**) gelagertes Stellrad **12** vorgesehen, dessen Drehung über seine Achse **13** und einen Riemenantrieb **14** auf den Polarisator 6 übertragen wird. Bei einer Drehung des Polarisators 6 wird aufgrund der drehfesten Verbindung auch das eine Ende 4a des Eingangs-Lichtwellenleiters 4 mitgedreht. Da sein anderes lichteintrittsseitiges Ende **4b** am Eingang 2 ebenfalls drehfest befestigt ist, führt die Drehung des Polarisators 6 zu einer Torsion innerhalb des Eingangs-Lichtwellenleiters 4. Durch diese Torsion werden vom Eingang 2 bis zum lichtaustrittsseitigen Ende 4a sowohl die Schwingungs- als auch die Polarisationsebene des im Eingangs-Lichtwellenleiters 4 geführten Lichts in dessen Umfangsrichtung gedreht. Allerdings ist, verglichen mit der Drehung des Polarisators 6, diese Drehung der Schwingungs- und der Polarisationsebene vernächlässigbar gering, so daß die Schwingungs- und die Polarisationsebene im folgenden als torsionsunabhängig angenommen werden. Am lichtaustrittsseitigen Ende 4a tritt das Licht in den Polarisator 6 ein, der je nach seiner Drehstellung Licht mit unterschiedlicher Polarisation durchläßt. Durch Verdrehen des Polarisators 6 läßt sich so die Polarisation des durchgelassenen Lichts ändern.

Bei dem in **Fig. 3** gezeigten zweiten Ausführungsbeispiel einer Polarisationsvorrichtung ist der drehfest mit dem Polarisator 6 verbundene Eingangs-Lichtwellenleiters **15** mit seinem anderen Ende **15a** nicht drehfest mit dem optischen Ausgang 2 verbunden, sondern in einem Drehlager **16** frei drehbar gelagert. Bei einer Drehung des Polarisators 6 in Richtung des Doppelpfeils 9 dreht sich der starre Eingangs-Lichtwellenleiter 4 auf seiner gesamten Länge torsionsfrei mit, wie durch den Doppelpfeil **17** angedeutet ist. Daher sind auch die Schwingungs- und die Polarisationsebene des über den optischen Eingang 2 in den Eingangs-Lichtwellenleiter 15 eingespeisten Lichts unabhängig von der jeweiligen Drehstellung des Polarisators 6, so daß dieser je nach seiner Drehstellung Licht mit unterschiedlicher Polarisation durchläßt. Durch Verdrehen des Polarisators 6 läßt sich so die Polarisation des durchgelassenen Lichts ändern.

Das Austrittsende **5b** des Ausgangs-Lichtwellenleiters 5 kann mit dem Ausgang 3 entweder drehfest oder entsprechend Fig. 3 nicht drehfest verbunden sein. Weiterhin ist es auch möglich, den Ausgangs-Lichtwellenleiter 5 z.B. über eine Drehkupplung nicht drehfest mit dem Polarisator 6 zu verbinden.

In **Fig. 4** ist die Polarisationsvorrichtung 1 in einer Meßanordnung **20** zum Messen der Polarisationsmodendispersion eines optischen Prüflings **21**, z.B. eines Lichtwellenleiters, eingesetzt. Der optische Prüfling 21 ist eingangsseitig an eine breitbandige Lichtquelle **22** (z.B. eine Leuchtdiode (LED) mit einer Wellenlänge von 1550 nm) unter Zwischenschaltung eines Polarisationsfilters 23 und austrittsseitig an den Eingang 2 der Polarisationsvorrichtung 1 angeschlossen. Deren Ausgang 3 ist über einen Verbindungslichtwellenleiter **24** an einen optischen Spekrumanalysator (OSA: Optical Spectrum Analyzer) **25** angeschlossen.

Das Licht der breitbandigen polarisierten Lichtquelle 22 wird in den bezüglich seiner Polarisationsmodendispersion zu messenden optischen Prüfling 21 geschickt und dann nach Durchgang durch die Polarisationsvorrichtung 1 in den optischen Spektrumanalysator 25 geleitet, der das optische Spektrum des Licht aufnimmt und daraus den Polarisationszustand des Lichtes analysiert. Dazu werden zwei aufeinanderfolgende Messungen des optischen Spektrums (Intensität in Abhängigkeit der Wellenlänge) durchgeführt, wobei der Polarisator 6 bei der zweiten Messung um ca. 90° gegenüber der ersten Messung gedreht wird. Aus diesen beiden optischen Spektren läßt sich mit bekannten Verfahren die Polarisationsmodendispersion des optischen Prüflings 21 ermitteln.

## Patentansprüche

1. Polarisationsvorrichtung (1) mit einem verdrehbaren Polarisator (6) und einem vor dem Polarisator (6) angeordneten Lichtwellenleiter (4; 15),
**dadurch gekennzeichnet,**
**daß** der Lichtwellenleiter (4; 15) mit dem Polarisator (6) drehfest verbunden ist.

2. Polarisationsvorrichtung nach Anspruch 1, **dadurch gekennzeichnet, daß** der Lichtwellenleiter (4) an anderer Stelle drehfest gehalten ist.

3. Polarisationsvorrichtung nach Anspruch 1 oder 2, **dadurch gekennzeichnet, daß** der Polarisator (6) auf seiner dem Lichtwellenleiter (4; 15) gegenüberliegenden Seite drehfest mit einem weiteren Lichtleiter (5) verbunden ist.

4. Polarisationsvorrichtung nach einem der vorhergehenden Ansprüche, **dadurch gekennzeichnet, daß** der Polarisator (6) mit dem Lichtwellenleiter (4, 5; 15) mechanisch oder stofflich verbunden ist.

5. Polarisationsvorrichtung nach einem der vorhergehenden Ansprüche, **gekennzeichnet durch** einen, vorzugsweise mechanischen Verdrehmechanismus für den Polarisator (6).

6. Polarisationsvorrichtung nach einem der vorhergehenden Ansprüche, **dadurch gekennzeichnet, daß** sie in einem Gehäuse (10) zwischen einem optischen Eingang (2) und einem optischen Ausgang (3) angeordnet ist.

7. Anordnung (20) zum Messen der Polarisationsmodendispersion eines optischen Prüflings (21), mit einer Lichtquelle (22), an die der zu messende optische Prüfling (21) angeschlossen ist, und mit der zwischen dem optischen Prüfling (21) und einem optischen Spektrumanalysator (25) angeordneten Polarisationsvorrichtung (1) nach einem der vorhergehenden Ansprüche.

8. Meßanordnung nach Anspruch 7, **dadurch gekennzeichnet, daß** der optische Prüfling (21) an den optischen Eingang (2) und der optische Spektrumanalysator (25) an den optischen Ausgang (3) des Gehäuses (10) der Polarisationsvorrichtung (1) angeschlossen ist.

9. Meßanordnung nach Anspruch 7, **dadurch gekennzeichnet, daß** der optische Prüfling (21) drehfest mit dem Polarisator (6) verbunden ist.

10. Verfahren zum Polarisieren des aus einem Lichtwellenleiter (4; 15) austretenden Lichts mittels eines Polarisators (6),
**dadurch gekennzeichnet,**
**daß** der mit dem Lichtwellenleiter (4; 15) drehfest verbundene Polarisator (6) gedreht wird.
